# EUROPEAN PATENT APPLICATION

(11) **EP 2 940 589 A2**
(43) Date of publication of application: **04.11.2015**
(21) Application number: 13794434.4
(22) Date of filing: 23.07.2013
(51) Int. Cl.: G06F 12/02

(54) **METHOD AND APPARATUS FOR IMPLEMENTING COMPATIBILITY BETWEEN DIFFERENT NAND FLASH MEMORIES**

(30) Priority: 27.12.2012 CN 201210578349
(71) Applicant: ZTE Corporation, Shenzhen, Guangdong 518057 (CN)
(72) Inventor: RUAN, Xianzhang, Shenzhen Guangdong 518057 (CN); HUANG, Yanjun, Shenzhen Guangdong 518057 (CN); CAO, Zhiyuan, Shenzhen Guangdong 518057 (CN)
(74) Representative: Novagraaf Technologies
(86) International application number: PCT/CN2013/079926
(87) International publication number: WO 2013/174326

(57) **Abstract**

A method and an apparatus for implementing compatibility of different Nand flashes are provided. Based on the technical solution provided by the present invention, the problem that a driver and a file system of a Nand flash are not easy to be compatible with a Nand flash of a different architecture in the prior art is solved, one product can be compatible with the existing Nand flashes in the mark, a good expansion interface is provided, and a new Nand flash can be supported quickly, so that the time to market of the product is shortened and the competitiveness of the product.

## Description

### Technical Field

The embodiments of the present invention relate to the technical field of computers, in particular to a method and an apparatus for implementing compatibility of different Nand flashes.

### Background

For consumer electronics, which are updated quickly, fiercely competitive and serious in homogenization, low cost becomes a competitive advantage which cannot be ignored, and a storage medium is a very important factor influencing the cost.

The Nand flash, which is characterized by low cost, is very widely applied to various consumer electronics. Whereas, manufactured by many manufacturers without a unified standard, the Nand flashes may be different in time sequence; and even when manufactured by the same manufacturer, the Nand flashes are also different in architecture, capacity, page size, spare size and other physical characteristics, and their costs may also vary greatly.

Due to the different physical characteristics of the Nand flashes, the driver, the file system and the like of the Nand flash are long in R&D cycle and not easy to be compatible, and the consumer electronics usually cannot support several Nand flashes at the same time. Therefore, for the consumer electronics, which is an intensively competitive industry, the competitiveness may be seriously affected undoubtedly.

### Summary

The embodiments of the present invention provide a method and an apparatus for implementing compatibility of different Nand flashes, in order to solve the problem that a driver and a file system of a Nand flash are not easy to be compatible with a Nand flash of a different architecture in the prior art.

An embodiment of the present invention provides a method for implementing compatibility of different Nand flashes, including: a Nand flash driver and a Universal Serial Bus (USB) driver are written to a boot area pre-divided in a Nand flash, a driver in the boot area is loaded to a Random Access Memory (RAM) to run, the Nand flash is initialized, a logical-to-physical block conversion table is created, and a software packet containing a system code and system configuration information is written to a reserved area pre-divided in the Nand flash, wherein the boot area is a physical partition and the reserved area is a logical partition; when a system is powered on, Nand flashes of different architectures are enumerated by a program in the ROM to load the Nand flash driver, the USB driver and other system programs in the boot area to the RAM to run, the Nand flash is initialized, the logic-to-physical block conversion table is re-created for the Nand flash according to the information in the spare area of the Nand flash, and the software packet in the reserved area is loaded to the RAM as required; and user data is written to a user area or is read from the user area according to the logic-to-physical block conversion table, wherein the user area is a logical partition.

Preferably, the step that a Nand flash driver and a USB driver are written to a boot area pre-divided in a Nand flash, a driver in the boot area is loaded to an RAM to run, the Nand flash is initialized, a logical-to-physical block conversion table is created, and a software packet containing a system code and system configuration information is written to a reserved area pre-divided in the Nand flash may includes: the flash ID of the Nand flash is acquired, and a Nand flash characteristic parameter corresponding to the flash ID is searched for in a pre-set flash list according to the flash ID; and the Nand flash driver and the USB driver are written to the boot area pre-divided in the Nand flash according to the Nand flash characteristic parameter, the driver in the boot area is loaded to the RAM to run, the Nand flash is initialized, the logical-to-physical block conversion table is created, and the software packet containing a system code and system configuration information is written to the reserved area pre-divided in the Nand flash.

Preferably, the method further includes: in the process that a Nand flash driver and a USB driver are written to the boot area pre-divided in the Nand flash and a system code and system configuration information are written to a reserved area pre-divided in the Nand flash according to the logical-to-physical block conversion table, an Error Checking and Correcting (ECC) code is computed through the Nand flash driver, and the ECC code is written to a corresponding spare area of the Nand flash.

Preferably, the step that a Nand flash driver and a USB driver are written to a boot area pre-divided in a Nand flash, a driver in the boot area is loaded to an RAM to run, the Nand flash is initialized, a logical-to-physical block conversion table is created, and a software packet containing a system code and system configuration information is written to a reserved area pre-divided in the Nand flash may include: different large mirror data packets containing ECC codes are made according to the Nand flash characteristic parameter, wherein each large mirror data packet includes: a Nand flash driver containing the ECC code, a USB driver containing the ECC code, a system code containing the ECC code and system configuration information containing the ECC code, a corresponding Nand flash driver containing the ECC code and a corresponding USB driver containing the ECC code are written to the boot area according to the Nand flash characteristic parameter, and the system code containing the ECC code and the system configuration information containing the ECC code corresponding to the Nand flash characteristic parameter are written to the reserved area according to the logical-to-physical block conversion table.

Preferably, the method further includes: when only compatibility of a 4bit ECC code and an 8bit ECC code needs to be implemented and the spare area is enough, an 8bit ECC algorithm is adopted for the Nand flash needing the 4bit ECC code; the actual size of the spare area is acquired according to the flash ID, and the excessive area of the spare area is filled; when only compatibility of a 1 bit ECC code and an 4bit ECC code needs to be implemented and the spare area is enough, a 4bit ECC algorithm is adopted for the Nand flash needing the 1 bit ECC code, the actual size of the spare area is acquired according to the flash ID, and the excessive area of the spare area is filled.

Preferably, the step that a logical-to-physical block conversion table is created may include: all the physical blocks are traversed, the logical block information corresponding to each of the physical blocks is acquired from the spare areas in the first page and the last page of the physical blocks, and a logical-to-physical block conversion table is created according to the corresponding relationship between the logical blocks and the physical blocks, wherein the logical-to-physical block conversion table stores the corresponding relationship between the logical block numbers and the physical block numbers, and tags the usage of the physical blocks.

Preferably, the step that a logical-to-physical block conversion table is created, a software packet containing a system code and system configuration information is written to a reserved area pre-divided in the Nand flash, and when a user carries out corresponding operation in the running process of the system, user data is written to a user area or read from the user area according to the logic-to-physical block conversion table may include: Step 1, a linear logical sector address is computed to obtain a corresponding logical block address and a corresponding sector address; Step 2, the logical-to-physical block conversion table is looked up, if the physical block has been allocated to the logical block corresponding to the logical block address, Step 3 is executed, otherwise, Step 4 is executed; Step 3, whether to write over is judged, when it is determined to write over, a new empty physical block is searched for according to the usage of the physical blocks in the logical-to-physical block conversion table, and the data, whose address is before the sector address, is moved from the current old physical block to the new empty physical block, and Step 5 is executed, and if not, Step 6 is executed directly; Step 4, a new empty physical block is searched for according to the usage of the physical blocks in the logical-to-physical block conversion table, and then Step 5 is executed; Step 5, the logical-to-physical block conversion table is updated, and then Step 6 is executed; Step 6, the data is written to the sector address; and Step 7, whether the sector address is the last sector is judged, if so, the old physical block is recycled, otherwise, the operation is ended.

An embodiment of the present invention further provides an apparatus for implementing compatibility of different Nand flashes, including: a system data writing component which is configured to write a Nand flash driver and a USB driver to a boot area pre-divided in a Nand flash, load a driver in the boot area to an RAM to run, initialize the Nand flash, create a logical-to-physical block conversion table, and write a software packet containing a system code and system configuration information to a reserved area pre-divided in the Nand flash, wherein the boot area is a physical partition and the reserved area is a logical partition, a power-on component which is configured to, when a system is powered on, enumerate Nand flashes of different architectures by a program in the ROM to load the Nand flash driver, the USB driver and other system programs in the boot area to the RAM to run, initialize the Nand flash, re-create the logic-to-physical block conversion table of the Nand flash according to the information in the spare area of the Nand flash, and load the software packet in the reserved area to the RAM as required, and a user data writing component which is configured to write user data to a user area or read the data from the user area according to the logic-to-physical block conversion table, wherein the user area is a logical partition.

Preferably, the system data writing component is configured to acquire a flash ID of the Nand flash, search for a Nand flash characteristic parameter corresponding to the flash ID in a pre-set flash list according to the flash ID, write the Nand flash driver and the USB driver to the boot area pre-divided in the Nand flash according to the Nand flash characteristic parameter, load a driver in the boot area to an RAM to run, initialize the Nand flash, create a logical-to-physical block conversion table, and write a software packet containing a system code and system configuration information to a reserved area pre-divided in the Nand flash.

Preferably, the system data writing component is configured to: in the process that a Nand flash driver and a USB driver are written to the boot area pre-divided in the Nand flash and a system code and system configuration information are written to a reserved area pre-divided in the Nand flash according to the logical-to-physical block conversion table, compute an ECC code through the Nand flash driver, and write the ECC code to a corresponding spare area of the Nand flash.

Preferably, the system data writing component is configured to: make different large mirror data packets containing ECC codes according to the Nand flash characteristic parameter, wherein each large mirror data packet includes: a Nand flash driver containing the ECC code, a USB driver containing the ECC code, a system code containing the ECC code and system configuration information containing the ECC code, write a corresponding Nand flash driver containing the ECC code and a corresponding USB driver containing the ECC code to the boot area according to the Nand flash characteristic parameter, and write the system code containing the ECC code and the system configuration information containing the ECC code corresponding to the Nand flash characteristic parameter to the reserved area according to the logical-to-physical block conversion table.

Preferably, the system data writing component is configured to: when only compatibility of a 4bit ECC code and an 8bit ECC code needs to be implemented and the spare area is enough, adopt an 8bit ECC algorithm for the Nand flash needing the 4bit ECC code, acquire the actual size of the spare area according to the flash ID and fill the excessive area of the spare area, when only compatibility of a 1 bit ECC code and an 4bit ECC code needs to be implemented and the spare area is enough, adopt a 4bit ECC algorithm for the Nand flash needing the 1 bit ECC code, and acquire the actual size of the spare area according to the flash ID and fill the excessive area of the spare area.

Preferably, the power-on component is configured to: traverse all the physical blocks, acquire the logical block information corresponding to each of the physical blocks from the spare areas in the first page and the last page of the physical blocks, and create a logical-to-physical block conversion table according to the corresponding relationship between the logical blocks and the physical blocks, wherein the logical-to-physical block conversion table stores the corresponding relationship between the logical block numbers and the physical block numbers, and tags the usage of the physical blocks.

Preferably, the system data writing component specifically includes: a first computing sub-component which is configured to compute a linear logical sector address to obtain a corresponding logical block address and a corresponding sector address; a first search sub-component which is configured to search the logical-to-physical block conversion table, if the physical block has been allocated to the logical block corresponding to the logical block address, call a first judgment sub-component, otherwise, call a second search sub-component; the first judgment sub-component which is configured to judge whether to write over, when it is determined to write over, search for a new empty physical block according to the usage of the physical blocks in the logical-to-physical block conversion table, move the data, whose address is before the sector address, from the current old physical block to the new empty physical block and call a first update sub-component, and if not, directly call a first writing sub-component; the second search sub-component which is configured to search for a new empty physical block according to the usage of the physical blocks in the logical-to-physical block conversion table and call the first update sub-component; the first update sub-component which is configured to update the logical-to-physical block conversion table and call the first writing sub-component; the first writing sub-component which is configured to write the data to the sector address and call a first recycling sub-component; and the first recycling sub-component which is configured to judge whether the sector address is the last sector, and if so, recycle the old physical block. The user data writing component specifically includes: a second computing sub-component which is configured to compute a linear logical sector address to obtain a corresponding logical block address and a corresponding sector address; a third search sub-component which is configured to search the logical-to-physical block conversion table, if the physical block has been allocated to the logical block corresponding to the logical block address, call a second judgment sub-component, otherwise, call a fourth search sub-component; the second judgment sub-component which is configured to judge whether to write over, when it is determined to write over, search for a new empty physical block according to the usage of the physical blocks in the logical-to-physical block conversion table, move the data, whose address is before the sector address, from the current old physical block to the new empty physical block and call a second update sub-component, and if not, directly call a second writing sub-component; the fourth search sub-component which is configured to search for a new empty physical block according to the usage of the physical blocks in the logical-to-physical block conversion table and call the second update sub-component; the second update sub-component which is configured to update the logical-to-physical block conversion table and call the second writing sub-component; the second writing sub-component which is configured to write the data to the sector address and call a first recycling sub-component; and a second recycling sub-component which is configured to judge whether the sector address is the last sector, if so, recycle the old physical block, otherwise, end the operation.

The beneficial effects of the present invention are as follows.

Through the technical solution above, the problem that a driver and a file system of a Nand flash are not easy to be compatible with a Nand flash of a different architecture in the prior art is solved, one product can be compatible with the existing Nand flashes in the mark, a good expansion interface is provided, and a new Nand flash can be supported quickly, so that the time to market of the product is shortened and the competitiveness of the product is improved.

What described above is only the overview of the technical solution of the present invention; in order to understand the technical means of the present invention more clearly, the present invention can be implemented according to the content of the specification; moreover, in order to facilitate the objectives, features and advantages of the present invention to be more obvious and understandable, the specific embodiments of the present invention are described below.

### Brief Description of the Drawings

By reading the detailed description of the preferred implementation way below, various other advantages and benefits may become clear for those skilled in the art. The drawings are only intended to show the objective of the preferred implementation ways instead of limiting the present invention. In the whole drawings, the same component is represented by the same reference number. In the drawings:
Fig. 1 is a flowchart of a method for implementing compatibility of different Nand flashes in an embodiment of the present invention;
Fig. 2 is a diagram showing the partitioning of a Nand flash in an embodiment of the present invention;
Fig. 3 is a diagram showing the flow of programming a software packet by a programming tool in an embodiment of the present invention;
Fig. 4 is a flowchart showing a system power-on process in an embodiment of the present invention;
Fig. 5 is a flowchart showing the process of creating a logical-to-physical block conversion table in an embodiment of the present invention;
Fig. 6 is a diagram showing the flow of writing a sector in an embodiment of the present invention, and
Fig. 7 is a diagram showing the structure of an apparatus for implementing compatibility of different Nand flashes in an embodiment of the present invention.

### Detailed Description of the Embodiments

The exemplary embodiment disclosed here is described below with reference to the drawings in more detail. Although the exemplary embodiment of the present invention is shown in the drawings, it should be understood that the present invention can be implemented in various forms instead of being limited by the embodiments described here. In contrast, these embodiments are provided to understand the present invention more clearly and convey the scope of the present invention to those skilled in the art completely.

In order to solve the problem that a driver and a file system of a Nand flash are not easy to be compatible with a Nand flash of a different architecture in the prior art, the embodiments of the present invention provide a method and an apparatus for implementing compatibility of different Nand flashes. the embodiments of the present invention are further described below in detail in combination with the drawings and the embodiments. It should be understood that the specific embodiments herein are only intended to explain the present invention instead of limiting the present invention.

### Method embodiment

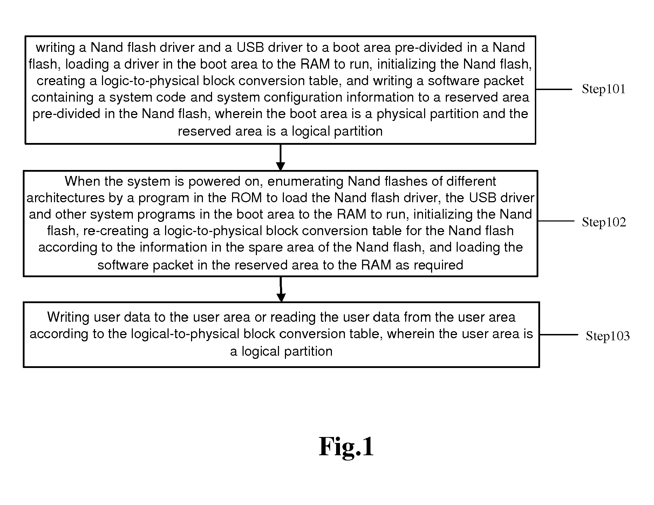

According to an embodiment of the present invention, a method for implementing compatibility of different Nand flashes is provided. Fig. 1 is a flowchart of a method for implementing compatibility of different Nand flashes in an embodiment of the present invention, as shown in Fig. 1, the method for implementing compatibility of different Nand flashes includes the following steps:
Step 101: A Nand flash driver and a USB driver are written to a boot area (Block0) pre-divided in a Nand flash through a programming tool of a PC terminal in a factory pattern, wherein in the process, the programming tool interacts with a system through a USB, and the program in an ROM runs in the system; then, a driver in the block0 is loaded to the RAM to run, the Nand flash is initialized, a logic-to-physical block conversion table is created, and a software packet containing a system code and system configuration information is written to a reserved area pre-divided in the Nand flash according to the logic-to-physical block conversion table, wherein the boot area is a physical partition and the reserved area is a logical partition. The data in the software packet described here is divided according to a functional component. For example, if the system is divided into five components M0 to M5, the five components have corresponding storage areas AREA0 to AREA5 in the reserved area.

That is to say, in Step 101, the Nand flash needs to be divided into a boot area, a reserved area and a user area at first; except the boot area (which corresponds to physical block0), in which the physical block of the Nand flash is directly operated, the reserved area and the user area are logical partitions and their operation is logical operation, thus, the benefit is that the limit of the physical partition to the size of the partition is shielded, and the size of the logical partition can be configured casually as required. In the embodiments, the logical partition corresponds to the physical block in a block mapping way, and a corresponding relationship is created during the initialization of the Nand flash. A basic Nand flash driver and a basic USB driver are stored in the boot area, and a compete system code and system configuration information are stored in the reserved area, and user data is stored in the user area.

Specifically, in order to solve the problem of how to implement compatibility of different Nand flashes, Step 101 includes the following processing:
1. A flash ID of the Nand flash is acquired, and a Nand flash characteristic parameter corresponding to the flash ID is searched for in a pre-set flash list according to the flash ID.
2. The Nand flash driver and the USB driver are written into the boot area pre-divided in the Nand flash in a factory pattern according to the Nand flash characteristic parameter, the driver in the boot area is loaded to the RAM to run, the Nand flash is initialized, a logical-to-physical block conversion table is created, and a software packet containing a system code and system configuration information is written to the reserved area pre-divided in the Nand flash.

That is to say, in order to solve the problem of how to implement compatibility of different Nand flashes, it is necessary to create a complete list for Nand flashes of different architectures and capacities from various factories in the market, and maintain a set of Nand flash characteristic parameters corresponding to the Nand flashes of different architectures and capacities at a programming tool side of a PC terminal; and a distinction is made according to different Nand flash IDs during programming to programme a software packet which matches with the Nand flash characteristic parameter corresponding to the Nand flash ID. When a new Nand flash appears, it is only necessary to add a Nand flash ID and other information in the Nand flash list.

In Step 101, to implement the compatibility of the 1 bit, 4bit, and 8bit ECC codes, the following two ways can be adopted:
Way 1: In the process that a Nand flash driver and a USB driver are written to the boot area pre-divided in the Nand flash and a system code and system configuration information are written to a reserved area pre-divided in the Nand flash according to the logical-to-physical block conversion table, an ECC code is computed through the Nand flash driver, and the ECC code is written to a corresponding spare area of the Nand flash.

The process that an ECC code is computed through the Nand flash driver, and the ECC code is written to a corresponding spare area of the Nand flash may include: when only compatibility of a 4bit ECC code and an 8bit ECC code needs to be implemented and the spare area is enough, an 8bit ECC algorithm is adopted for the Nand flash needing the 4bit ECC code; similarly, when only compatibility of a 1 bit ECC code and an 4bit ECC code needs to be implemented and the spare area is enough, a 4bit ECC algorithm is adopted for the Nand flash needing the 1bit ECC code, the actual size of the spare area is acquired according to the flash ID, and the excessive area of the spare area is filled.

Way 2: Different large mirror data packets containing ECC codes are made according to the Nand flash characteristic parameter, wherein each large mirror data packet includes: a Nand flash driver containing the ECC code, a USB driver containing the ECC code, a system code containing the ECC code and system configuration information containing the ECC code; then, a corresponding Nand flash driver containing the ECC code and a corresponding USB driver containing the ECC code are written to the boot area according to the Nand flash characteristic parameter, and the system code containing the ECC code and the system configuration information containing the ECC code corresponding to the Nand flash characteristic parameter are written to the reserved area according to the logical-to-physical block conversion table.

That is to say, in the actual application, there are two way for implementing compatibility of the 1bit, 4bit and 8bit ECC codes: Way 1: a software packet, which has no ECC code, matches with a bottom driver of a device through a programming tool during programming to acquire a Nand flash ID; a corresponding software packet is programmed and an ECC code is computed through the Nand flash driver in the programming process (the ECC code is computed by hardware or software) and then the ECC code is written to the spare area of the Nand flash. Way 2: Different large mirror software packets containing the ECC code are made for the bit, 4bit and 8bit ECC codes respectively, and are programmed according to the acquired different Nand flash IDs during the programming without computing the ECC code in the programming process.

If only 4bit and 8bit ECC codes need to implement compatibility and the spare area is enough, a method for downward compatibility of an 8bit ECC code can be adopted, namely, an 8bit ECC algorithm is also adopted for the flash needing the 4bit ECC code, a distinction is made according to the acquired Nand flash ID during the programming to acquire the actual size of the spare area; and the excessive area of the spare area is filled with OXff.

If only 1 bit and 4bit ECC codes need to implement compatibility and the spare area is enough, a method for downward compatibility of a 4bit ECC code can be adopted, namely, a 4bit ECC algorithm is also adopted for the flash needing the 1 bit ECC code, a distinction is made according to the acquired Nand flash ID during the programming to acquire the actual size of the spare area; and the excessive area of the spare area is filled with OXff.

Step 102: When the system is powered on in a normal mode, Nand flashes of different architectures are enumerated by a program in the ROM to load the Nand flash driver, the USB driver and other system programs in the boot area to the RAM to run, the Nand flash is initialized, the logic-to-physical block conversion table is re-created for the Nand flash according to the information in the spare area of the Nand flash (it should be noted that the logic-to-physical block conversion table is re-created when the system is powered on, and needs to be re-created according to the information in the spare area every time the system is powered on no matter for the reserved area or for the user area), and the system code and the system configuration information in the reserved area are loaded to the RAM to run according to the logic-to-physical block conversion table as required. For example, data may be read from AREA0 of the reserved area when M0 is loaded, and at the same time, the system may write the configuration data information stored in the reserved area to the RAM as required.

In the step, the step that a logical-to-physical block conversion table is created may include: all the physical blocks are traversed, the logical block information corresponding to each of the physical blocks is acquired from the spare areas in the first page and the last page of the physical blocks, and a logical-to-physical block conversion table is created according to the corresponding relationship between the logical block and the physical block, wherein the logical-to-physical block conversion table stores the corresponding relationship between the logical block numbers and the physical block numbers, and tags the usage of the physical blocks. In the actual application, a table can also be created separately to store the usage of the physical blocks.

That is to say, in Step 102, in the boot stage, the ROM (in which the codes are solidified) enumerates the summarized Nand flash of a different architecture to read the codes pre-stored in the boot area (block0), so as to acquire a basic Nand flash driver and a basic USB driver. Then the system code in the reserved area is read to the code area of the RAM and the system configuration information is read to the data area through a basic reading and writing interface; and a system code is operated in the RAM according to the system configuration information.

Step 103: When a user carries out corresponding operation in the running process of the system, user data (a file) is written to the user area or is read from the user area according to the logical-to-physical block conversion table in the user area, wherein the user area is a logical partition.

In Steps 101 to 103, the data writing method that the system code and the system configuration information are written to the reserved area pre-divided in the Nand flash according to the logical-to-physical block conversion table in the reserved area and user data is written to the user area according to the logical-to-physical block conversion table in the user area may include:
Step 1: A linear logical sector address is computed to obtain a corresponding logical block address and a corresponding sector address.
Step 2: A logical-to-physical block conversion table is looked up, if a physical block has been allocated to the logical block corresponding to the logical block address, Step 3 is executed, otherwise, Step 4 is executed.
Step 3: Whether to write over is judged, when it is determined to write over, a new empty physical block is searched for according to the usage of the physical blocks in the logical-to-physical block conversion table, the data, whose address is before the sector address, is moved from the current old physical block to the new empty physical block, and Step 5 is executed; and when it is not determined to write over, Step 6 is executed directly.
Step 4: A new empty physical block is searched for according to the usage of the physical blocks in the logical-to-physical block conversion table, and then Step 5 is executed.
Step 5: The logical-to-physical block conversion table is updated, and then Step 6 is executed.
Step 6: Data is written to the sector address.
Step 7: Whether the sector address is the last sector is judged, if so, the old physical block is added to a recycle table and is recycled when the CPU is idle.

The technical solution of the embodiments of the present invention is described below in combination with the drawings in detail.

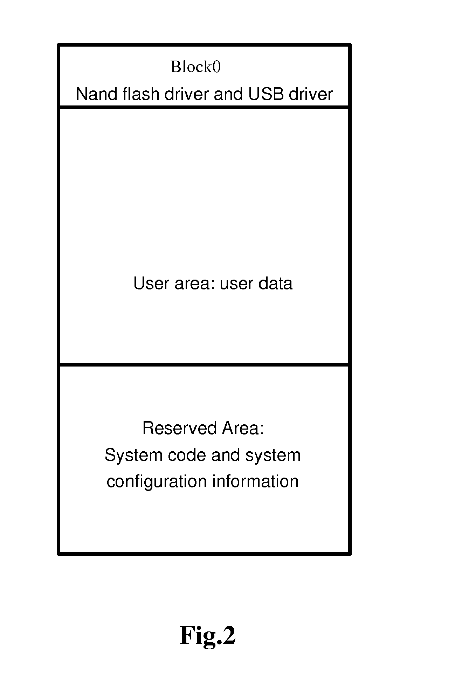

Fig. 2 is a diagram showing the partitioning of a Nand flash in an embodiment of the present invention; as shown in Fig. 2, in the embodiment, the Nand flash can be divided into three partitions. Wherein block0 partition corresponds to physical block0 and stores a basic Nand flash driver and a basic USB driver; and limited by the size of the physical block, the codes here can be condensed and cannot be bigger than the block. The reserved area is a logical partition and stores a complete system code; the inside of the logical area can be divided again according to a specific component; the reserved area, which is partitioned logically, has been isolated from a specific physical characteristic, so that reading and writing the area are to read and write a continuous logical address, and the code of the component can be read as long as the initial logical address and the length of each component are known. Thus, the benefits here are obvious, for example, waste of space is reduced, the influence from a damaged block is avoided maximally, and the influence to other partitions caused when one partition needs to be increased or reduced is minimized. The user area is used for storing user data.

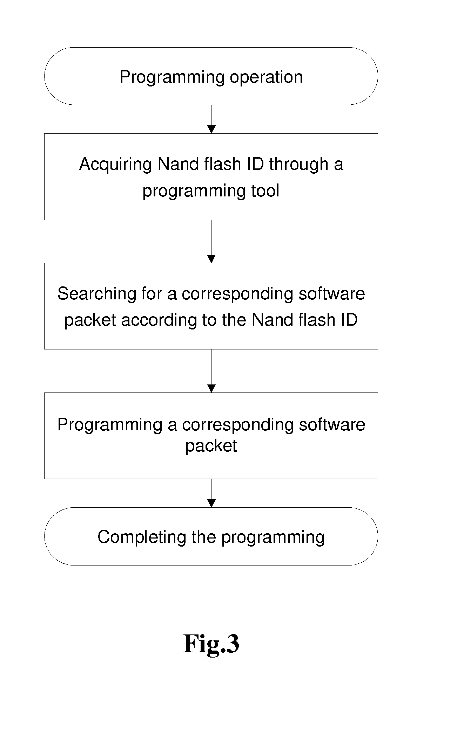

Fig. 3 is a diagram showing the flow of programming a software packet by a programming tool in an embodiment of the present invention; as shown in Fig. 3, before the programming of the programming tool, firstly, a Nand flash ID is acquired, secondly, a corresponding software packet is searched for according to the Nand flash ID, and finally, programming is carried out again. Thus, the benefit is that a complete Nand flash list can be maintained on a tool side at the PC, and the maintenance is very convenient no matter how many flashes are added in the future.

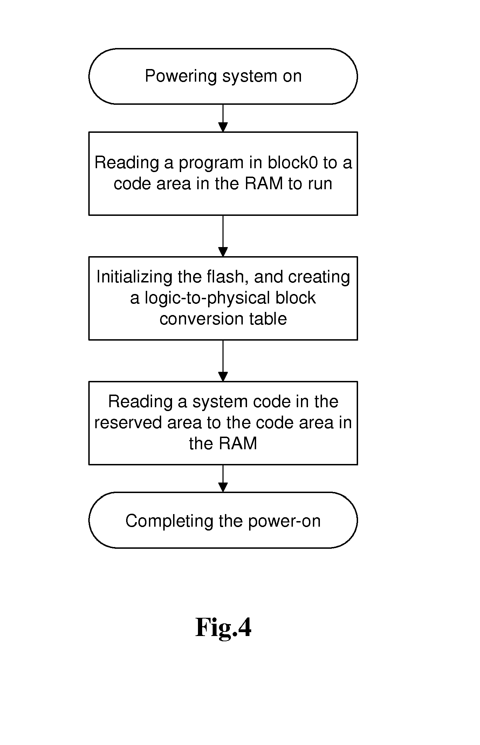

Fig. 4 is a flowchart showing the power-on process of a system in an embodiment of the present invention, as shown in Fig. 4, after the system is powered on, the program in the ROM runs at first, and its task is to read the program (Nand flash driver and USB driver) in the Nand flash block0 to the code area of the RAM to run; and after the code in the block0 is loaded, the Nand flash is initialized and a logical-to-physical block conversion table is created. Finally, the program in the reserved area is read to the RAM to run as required.

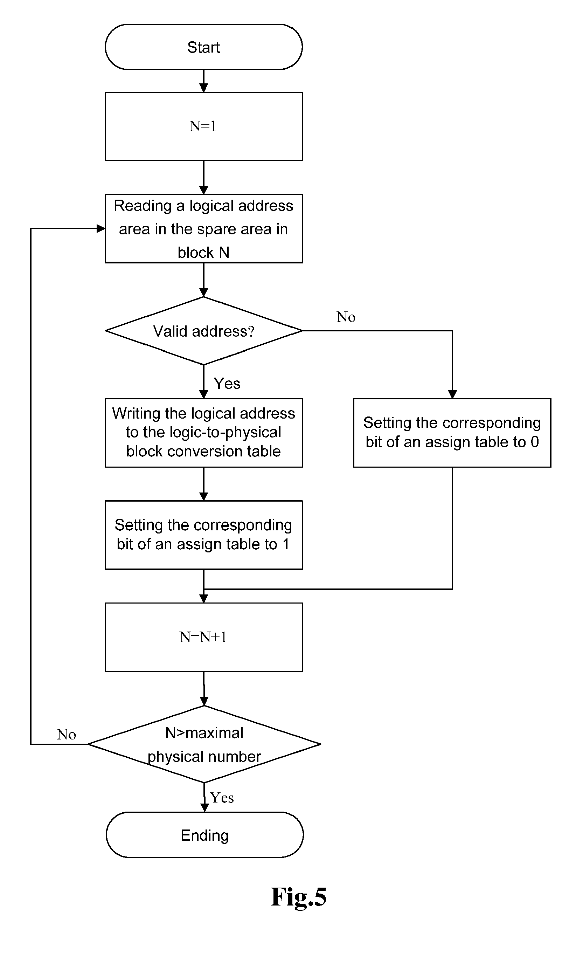

Fig. 5 is a flowchart showing the process of creating a logical-to-physical block conversion table in an embodiment of the present invention; as shown in Fig. 5, firstly, all the physical blocks in the whole Nand flash are traversed, the logical block information corresponding to each of the physical blocks is acquired from the spare areas in the first page to the last page of the physical block, and a logical-to-physical block conversion table Log2PhyTable is created, in which the corresponding relationship between the number of the logical block and the number of the physical block is recorded. Moreover, an assign table is created, in which each bit is used for tagging the usage of one physical block, wherein 0b indicates that the physical block is not used yet, and 1 b indicates that the physical block has been used or damaged. In the actual application, Log2PhyTable is stored in the RAM, but limited by system resources, the RAM space actually allocated is not enough for storing a complete Log2PhyTable; thus, the Log2PhyTable can be divided into N tables, the Nand flash is also divided into N zones, and the size of each table corresponding to one zone of the Nand flash is Log2PhyTable Size/N. When the logical-to-physical block conversion table is created during the initialization of the system, a Log2PhyTable corresponding to Zone0 is created at first and resides in a memory, and a block is found in the zone0 to store the Log2PhyTable of other zones, which include zone1 to zone(n-1). When zone x is needed, the Log2PhyTable of zone x is read from Nand to the RAM, namely, only the Log2PhyTables of zone0 and zone x exist in the memory.

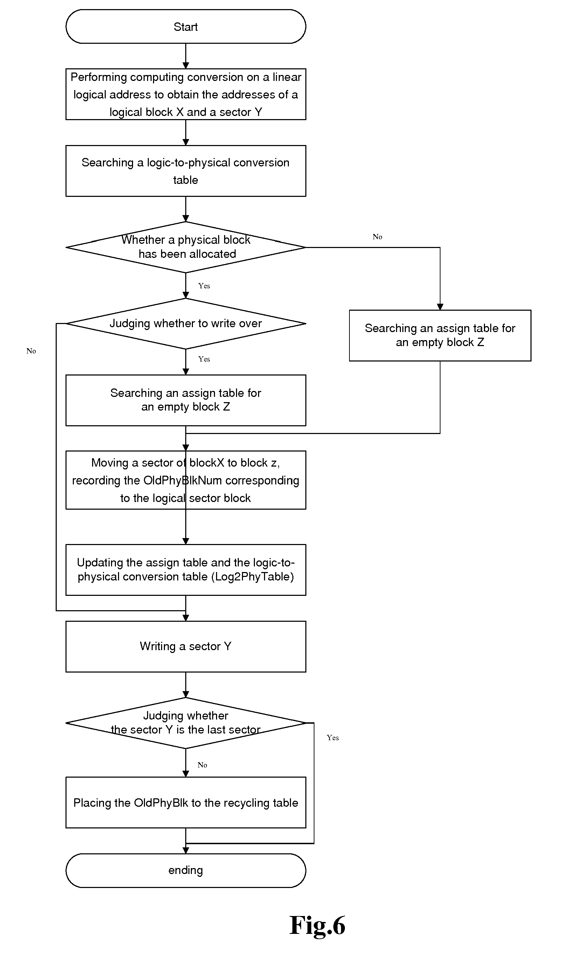

Fig. 6 is a diagram showing the flow of writing a sector in an embodiment of the present invention, as shown in Fig. 6, the Nand flash has the physical characteristics of erasing according to block and writing according to sector or page, and the writing operation of the logical block does not need to concern about the physical characteristics. Thereby, the operation of "movement" is frequently carried out in the writing process. As shown in Fig. 6,
Step 1: A linear logical sector is computed to obtain the addresses of a logical blockX and a sectorY.
Step 2: A logical-to-physical block conversion table is looked up, if a physical block has been allocated to the logical block, Step 3 is executed, otherwise, Step 4 is executed.
Step 3: Whether to write over is further judged, when it is determined to write over, AssignTable is searched for an empty blockZ, and the data, whose address is before the sectorY is moved from the current block(old block) to blockZ; and if not, Step 4 is executed directly.
Step 4: SectorY is written.
Step 5: Whether the SectorY is the last Sector is judged, and if so, the OldBlock is placed back to a recycle table.

It should be noted that, in the processing above, corresponding protection is needed when the writing operation is unsuccessful; and generally, an abandoned block is recycled when the system is idle.

To sum up, through the technical solution above, the problem that a driver and a file system of a Nand flash are not easy to be compatible with a Nand flash of a different architecture in the prior art is solved, one product can be compatible with the existing Nand flashes in the mark, a good expansion interface is provided, and a new Nand flash can be supported quickly, so that the time to market of the product is shortened and the competitiveness of the product is improved.

### Apparatus embodiment

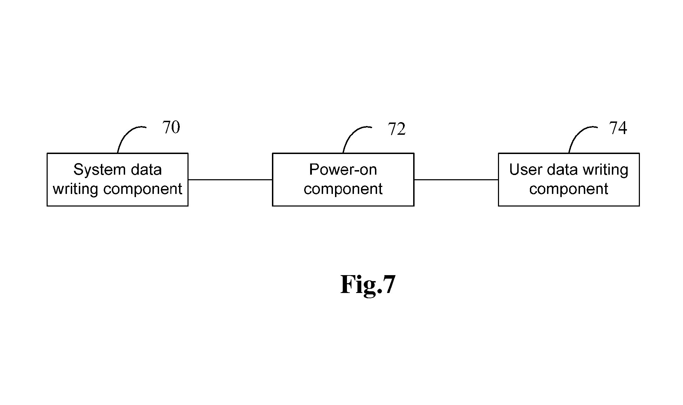

According to an embodiment of the present invention, an apparatus for implementing compatibility of different Nand flashes is provided. Fig. 7 is a diagram showing the structure of an apparatus for implementing compatibility of different Nand flashes in an embodiment of the present invention. As shown in Fig. 7, the apparatus for implementing compatibility of different Nand flashes includes: a system data writing component 70, a power-on component 72 and a user data writing component 74, which are described below in detail respectively.

The system data writing component 70 is configured to write a Nand flash driver and a USB driver to a boot area (Block 0) pre-divided in a Nand flash through a programming tool of a PC terminal in a factory pattern, wherein in the process, the programming tool interacts with a system through a USB, and at the moment, the program in an ROM runs in the system; then, a driver in the block 0 is loaded to the RAM to run, the Nand flash is initialized, a logic-to-physical block conversion table is created, and a software packet containing a system code and system configuration information is written to a reserved area pre-divided in the Nand flash, wherein the boot area is a physical partition and the reserved area is a logical partition. The data in the software packet described here is divided according to a functional component. For example, if the system is divided into five components M0 to M5, the five components have corresponding storage areas AREA0 to AREA5 in the reserved area.

That is to say, the system data writing component 70 needs to divide the Nand flash into a boot area, a reserved area and a user area at first; except the boot area (which corresponds to physical block 0), in which the physical block of the Nand flash is operated directly, the reserved area and the user area are logical partitions and their operation is logical operation, thus, the benefit is that the limit of the physical partition to the size of the partition is shielded, and the size of the logical partition can be configured casually as required. In the embodiments, the logical partition corresponds to the physical block in a block mapping way, and a corresponding relationship is created during the initialization of the Nand flash. A basic Nand flash driver and a basic USB driver are stored in the boot area, and a compete system code and system configuration information are stored in the reserved area, and user data is stored in the user area.

The system data writing component 70 is specifically configured to: acquire a flash ID of the Nand flash, search for a Nand flash characteristic parameter corresponding to the flash ID in a pre-set flash list according to the flash ID, write a corresponding Nand flash driver and a corresponding USB driver to the boot area according to the Nand flash characteristic parameter, and write a system code and system configuration information corresponding to the Nand flash characteristic to a reserved area according to a logical-to-physical block conversion table.

That is to say, in order to solve the problem of how to implement compatibility of different Nand flashes, it is necessary to create a complete list for Nand flashes of different architectures and capacities from various factories in the market, and maintain a set of Nand flash characteristic parameters corresponding to the Nand flashes of different architectures and capacities at a programming tool side of a PC terminal; and a distinction is made according to different Nand flash IDs during programming to programme a software packet which matches with the Nand flash characteristic parameter corresponding to the Nand flash ID. When a new Nand flash appears, it is only necessary to add a Nand flash ID and other information in the Nand flash list.

To implement the compatibility of 1 bit, 4bit and 8bit ECC codes, the system data writing component 70 adopts the following two ways:
Way 1: The system data writing component 70 writes a Nand flash driver and a USB driver to the boot area pre-divided in the Nand flash, and a system code and system configuration information to a reserved area pre-divided in the Nand flash according to the logical-to-physical block conversion table, computes an ECC code through the Nand flash driver, and writes the ECC code to a corresponding spare area of the Nand flash, wherein when only compatibility of a 4bit ECC code and an 8bit ECC code needs to be implemented and the spare area is enough, an 8bit ECC algorithm is adopted for the Nand flash needing the 4bit ECC code; the actual size of the spare area is acquired according to the flash ID, and the excessive area of the spare area is filled.

If only 1bit and 4bit ECC codes need to implement compatibility and the spare area is enough, a method for downward compatibility of the 4bit ECC code can be adopted, namely, a 4bit ECC algorithm is also adopted for the flash needing the 1bit ECC code, and a distinction is made according to the acquired Nand flash ID during the programming to acquire the actual size of the spare area; and the excessive area of the spare area is filled with OXff.

Way 2: The system data writing component 70 is further configured to: make different large mirror data packets containing ECC codes according to the Nand flash characteristic parameter, wherein each large mirror data packet includes: a Nand flash driver containing the ECC code, a USB driver containing the ECC code, a system code containing the ECC code and system configuration information containing the ECC code, write a corresponding Nand flash driver containing the ECC code and a corresponding USB driver containing the ECC code to the boot area according to the Nand flash characteristic parameter, and write the system code containing the ECC code and the system configuration information containing the ECC code corresponding to the Nand flash characteristic parameter to the reserved area according to the logical-to-physical block conversion table in the reserved area.

That is to say, in the actual application, there are two way for implementing compatibility between the 1 bit, 4bit and 8bit ECC codes: Way 1: a software packet, which has no ECC code, matches with a bottom driver of a device through a programming tool during programming to acquire a Nand flash ID; a corresponding software packet is programmed and an ECC code is computed through the Nand flash driver in the programming process (the ECC code is computed by hardware or software) and then the ECC code is written to the spare area of the Nand flash. Way 2: Different large mirror software packets containing ECC codes are made for the bit, 4bit and 8bit ECC codes respectively, and different large mirror software packets are programmed according to the acquired different Nand flash IDs during the programming without computing the ECC code in the programming process.

If only 4bit and 8bit ECC codes need to implement compatibility and the spare area is enough, a method for downward compatibility of the 8bit ECC code can be adopted, namely, a 8bit ECC algorithm is also adopted for the flash needing the 4bit ECC code, and a distinction is made according to the acquired Nand flash ID during the programming to acquire the actual size of the spare area; and the excessive area of the spare area is filled with OXff.

If only 1 bit and 4bit ECC codes need to implement compatibility and the spare area is enough, a method for downward compatibility of the 4bit ECC code can be adopted, namely, a 4bit ECC algorithm is also adopted for the flash needing the 1 bit ECC code, and a distinction is made according to the acquired Nand flash ID during the programming to acquire the actual size of the spare area; and the excessive area of the spare area is filled with OXff.

The system data writing component 70 specifically includes:
a first computing sub-component which is configured to compute a linear logical sector address to obtain a corresponding logical block address and a corresponding sector address;
a first search sub-component which is configured to search the logical-to-physical block conversion table, if the physical block has been allocated to the logical block corresponding to the logical block address, call a first judgment sub-component, otherwise, call a second search sub-component;
the first judgment sub-component which is configured to judge whether to write over, when it is determined to write over, search for a new empty physical block according to the usage of the physical blocks in the logical-to-physical block conversion table, move the data, whose address is before the sector address, from the current old physical block to the new empty physical block and call a first update sub-component, and if not, directly call a first writing sub-component;
the second search sub-component which is configured to search for a new empty physical block according to the usage of the physical blocks in the logical-to-physical block conversion table and call the first update sub-component;
the first update sub-component which is configured to update the logical-to-physical block conversion table and call the first writing sub-component;
the first writing sub-component which is configured to write the data to the sector address and call a first recycling sub-component; and
the first recycling sub-component which is configured to judge whether the sector address is the last sector, and if so, recycle the old physical block.

The power-on component 72 is configured to, when the system is powered on in a normal mode, enumerate Nand flashes of different architectures by a program in the ROM to load the Nand flash driver, the USB driver and other system programs in the boot area to the RAM to run, initialize the Nand flash, re-create the logic-to-physical block conversion table of the Nand flash according to the information in the spare area of the Nand flash (it should be noted that the logic-to-physical block conversion table is re-created during the power on, and needs to be re-created according to the information in the spare area every time the system is powered on no matter for the reserved area or for the user area), and load the system code and the system configuration information in the reserved area to the RAM to run as required. For example, data may be read from AREA0 of the reserved area when M0 is loaded, and at the same time, the system may read the configuration data information stored in the reserved area to the RAM as required.

The power-on component 72 is specifically configured to: traverse all the physical blocks in the user area, acquire the logical block information corresponding to each of the physical blocks from the spare areas in the first page and the last page of the physical blocks, and create a logical-to-physical block conversion table for the user area according to the corresponding relationship between the logical block and the physical block, wherein the logical-to-physical block conversion table in the user area stores the corresponding relationship between the logical block numbers and the physical block numbers, and tags the usage of the physical blocks.

That is to say, in the boot stage, the ROM (in which the codes are hardened) enumerates the summarized Nand flash of a different architecture to read the codes pre-stored in the boot area (block0), so as to acquire a basic Nand flash driver and a basic USB driver; then, the system code in the reserved area is read to the code area of the RAM and the system configuration information is read to the data area through a basic reading and writing interface; and a system code is operated in the RAM according to the system configuration information.

The user data writing component 74 is configured to, when a user carries out corresponding operation in the running process of the system, write user data (file) to the user area or read the data (file) from the user area according to the logical-to-physical block conversion table in the user area, wherein the user area is a logical partition.

The user data writing component 74 specifically includes:
a second computing sub-component which is configured to compute a linear logical sector address to obtain a corresponding logical block address and a corresponding sector address;
a third search sub-component which is configured to search the logical-to-physical block conversion table, if the physical block has been allocated to the logical block corresponding to the logical block address, call a second judgment sub-component, otherwise, call a fourth search sub-component;
the second judgment sub-component which is configured to judge whether to write over, when it is determined to write over, search for a new empty physical block according to the usage of the physical blocks in the logical-to-physical block conversion table, move the data, whose address is before the sector address, from the current old physical block to the new empty physical block and call a second update sub-component, and if not, directly call a second writing sub-component;
the fourth search sub-component which is configured to search for a new empty physical block according to the usage of the physical blocks in the logical-to-physical block conversion table and call the second update sub-component;
the second update sub-component which is configured to update the logical-to-physical block conversion table and call the second writing sub-component;
the second writing sub-component which is configured to write the data to the sector address and call a first recycling sub-component; and
a second recycling sub-component which is configured to judge whether the sector address is the last sector, if so, add the old physical block to a recycling table, otherwise, recycle it when the CPU is idle.

To sum up, through the technical solution above, the problem that a driver and a file system of a Nand flash are not easy to be compatible with a Nand flash of a different architecture in the prior art is solved, one product can be compatible with the existing Nand flashes in the mark, a good expansion interface is provided, and a new Nand flash can be supported quickly, so that the time to market of the product is shortened and the competitiveness of the product is improved.

The algorithm and display provided here are not inherently related to any specific computer, virtual system or other devices. Various universal systems can also be used together with demonstration based on this. According to what described above, the structures required for constructing this system become obvious. In addition, this present invention is also not for any specific programming language. It should be understood that the content of the present invention described here can be implemented via various programming languages, and the specific language is described above to disclose the optimal implementation way of the present invention.

In the specification herein, a great number of details are explained. However, it can be understood that the embodiments of the present invention can be implemented without such details. In some examples, the well-known methods, structures and techniques are not specifically shown for the purpose of clear understanding of the present invention.

Similarly, it should be understood that, to simplify the present invention and help to understand one or more aspects of the present invention, respective characteristics of the present invention are sometimes grouped in a single embodiment, figure or their description together in the description of the exemplary embodiments above. The disclosed methods, however, should not be explained as the following intension that the present invention to be protected requires more characteristics than that explicitly recorded characteristics in each claim. More specifically, as what is reflected by the following claims, the present invention is intended to have less characteristics than all the characteristics of each embodiment. Therefore, it is clear that the claims complying with the specific embodiments are included in the specific embodiments, and each claim itself is used as a single embodiment of the present invention.

Those skilled in the art may understand that the components in the devices of the embodiments can be adaptively changed and set in one or more devices different from that in the embodiments. The components, units or components in the embodiments can be combined into a component, a unit or a component, and separated into many sub-components, sub-units or sub-components. Except for at least some characteristics and/or processes or units which are mutually exclusive, all characteristics disclosed in the specification (including accompanying claims, abstract and drawings) and all processes or units of any method or device disclosed as such can be in any combination. Each characteristic disclosed in the specification (including accompanying claims, abstract and drawings) can be replaced with the alternatives providing the same, equivalent or similar purpose, unless expressly specified otherwise.

In addition, those skilled in the art can understand that the combination of characteristics of different embodiments means to be in the scope of the present invention and forms different embodiment, although some embodiments herein includes some characteristics in other embodiments rather than other characteristics. For example, in the following claims, any of the claims to be protected can be used in any combination.

Respective component embodiments of the present invention can be implemented by hardware, or a software component running on one or more processors, or the combination thereof. Those skilled in the art should understand that some or all functions of some or all components in the apparatus for implementing compatibility of different Nand flashes in an embodiment of the present invention can be implemented by microprocessors or digital signal processors (DSP) in practice. The present invention can also be implemented as devices or apparatus programs (for example, computer program and computer program product) to execute some or all methods described herein. The programs implementing the present invention in such way can be stored on computer readable media or in the form of one or more signals. Such signals can be downloaded from websites, provided by carrier signals or provided in any other forms.

It should be noted that the embodiments above are intended to explain the present invention instead of limiting the present invention, and the alternative embodiments can be made by those skilled in the art in the scope of the appended claims. Any reference number in the brackets in the claims does not limit the claims. The term "include" does not exclude the elements or steps not in the claims. The term "a" in front of an element does not exclude a plurality of such elements. The present invention can be implemented in virtue of hardware having a plurality of different elements and appropriately programmed computers. In the claims listing several devices, several of these devices can be embodied by the same hardware, The use of the terms, first, second, third, and the like, does not represent any sequence. These terms can be explained as names.

## Claims

1. A method for implementing compatibility of different Nand flashes, **characterized by** comprising:
writing a Nand flash driver and a Universal Serial Bus, USB, driver to a boot area pre-divided in a Nand flash, loading a driver in the boot area to a Random Access Memory, RAM, to run, initializing the Nand flash, creating a logical-to-physical block conversion table, and writing a software packet containing a system code and system configuration information to a reserved area pre-divided in the Nand flash, wherein the boot area is a physical partition and the reserved area is a logical partition;
when a system is powered on, enumerating Nand flashes of different architectures by a program in the ROM to load the Nand flash driver, the USB driver and other system programs in the boot area to the RAM to run, initializing the Nand flash, re-creating the logic-to-physical block conversion table of the Nand flash according to information in the spare area of the Nand flash, and loading the software packet in the reserved area to the RAM as required; and
writing user data to a user area or reading the user data from the user area according to the logic-to-physical block conversion table, wherein the user area is a logical partition.

2. The method according to claim 1, **characterized in that** writing the Nand flash driver and the USB driver to the boot area pre-divided in the Nand flash, loading the driver in the boot area to the RAM to run, initializing the Nand flash, creating the logical-to-physical block conversion table, and writing the software packet containing the system code and system configuration information to the reserved area pre-divided in the Nand flash comprises:
acquiring a flash ID of the Nand flash, and searching for a Nand flash characteristic parameter corresponding to the flash ID in a pre-set flash list according to the flash ID; and
writing the Nand flash driver and the USB driver to the boot area pre-divided in the Nand flash according to the Nand flash characteristic parameter, loading the driver in the boot area to the RAM to run, initializing the Nand flash, creating the logical-to-physical block conversion table, and writing the software packet containing the system code and system configuration information to the reserved area pre-divided in the Nand flash.

3. The method according to claim 2, **characterized in that** the method further comprises:
in the process of writing the Nand flash driver and the USB driver to the boot area pre-divided in the Nand flash and writing the system code and the system configuration information to the reserved area pre-divided in the Nand flash according to the logical-to-physical block conversion table, computing an Error Checking and Correction, ECC, code through the Nand flash driver, and writing the ECC code to a corresponding spare area of the Nand flash.

4. The method according to claim 3, **characterized in that** the method further comprises:
when only compatibility of a 4bit ECC code and an 8bit ECC code needs to be implemented and the spare area is enough, adopting an 8bit ECC algorithm for the Nand flash needing the 4bit ECC code; acquiring the actual size of the spare area according to the flash ID, and filling the excessive area of the spare area; and
when only compatibility of a 1 bit ECC code and an 4bit ECC code needs to be implemented and the spare area is enough, adopting a 4bit ECC algorithm for the Nand flash needing the 1bit ECC code, acquiring the actual size of the spare area according to the flash ID, and filling the excessive area of the spare area.

5. The method according to claim 2, **characterized in that** writing the Nand flash driver and the USB driver to the boot area pre-divided in the Nand flash, loading the driver in the boot area to the RAM to run, initializing the Nand flash, creating the logical-to-physical block conversion table, and writing the software packet containing the system code and system configuration information to the reserved area pre-divided in the Nand flash comprises:
making different large mirror data packets containing ECC codes according to the Nand flash characteristic parameter, wherein each large mirror data packet comprising: a Nand flash driver containing the ECC code, a USB driver containing the ECC code, a system code containing the ECC code and system configuration information containing the ECC code;
writing a corresponding Nand flash driver containing the ECC code and a corresponding USB driver containing the ECC code to the boot area according to the Nand flash characteristic parameter; and writing the system code containing the ECC code and the system configuration information containing the ECC code corresponding to the Nand flash characteristic parameter to the reserved area according to the logical-to-physical block conversion table.

6. The method according to claim 1, **characterized in that** creating a logical-to-physical block conversion table comprises:
traversing all the physical blocks, acquiring the logical block information corresponding to each of the physical blocks from the spare areas in the first page and the last page of the physical blocks, and creating the logical-to-physical block conversion table according to the corresponding relationship between the logical blocks and the physical blocks, wherein the logical-to-physical block conversion table storing the corresponding relationship between the logical block numbers and the physical block numbers, and tagging the usage of the physical blocks.

7. The method according to claim 6, **characterized in that** creating the logical-to-physical block conversion table, writing the software packet comprising the system code and system configuration information to the reserved area pre-divided in the Nand flash, and when the user carries out corresponding operation in the running process of the system, writing user data to the user area or read the data from the user area according to the logic-to-physical block conversion table comprises:
Step 1, computing a linear logical sector address to obtain a corresponding logical block address and a corresponding sector address;
Step 2, looking up the logical-to-physical block conversion table, when the physical block has been allocated to the logical block corresponding to the logical block address, executing Step 3, when the physical block has not been allocated to the logical block corresponding to the logical block address, executing Step 4;
Step 3, judging whether to write over, when it is determined to write over, searching for a new empty physical block according to the usage of the physical blocks in the logical-to-physical block conversion table, and moving the data, whose address is before the sector address, from the current old physical block to the new empty physical block, and executing Step 5, and when it is not determined to write over, executing Step 6 directly;
Step 4, searching for a new empty physical block according to the usage of the physical blocks in the logical-to-physical block conversion table, and then executing Step 5;
Step 5, updating the logical-to-physical block conversion table and then executing Step 6;
Step 6, writing the data to the sector address; and
Step 7, judging whether the sector address is the last sector, when the sector address is the last sector, recycling the old physical block, when the sector address is not the last sector, ending the operation.

8. An apparatus for implementing compatibility of different Nand flashes, **characterized by** comprising:
a system data writing component, configured to write a Nand flash driver and a USB driver to a boot area pre-divided in a Nand flash, load a driver in the boot area to an RAM to run, initialize the Nand flash, create a logical-to-physical block conversion table, and write a software packet containing a system code and system configuration information to a reserved area pre-divided in the Nand flash, wherein the boot area is a physical partition and the reserved area is a logical partition;
a power-on component, configured to, when a system is powered on, enumerate Nand flashes of different architectures by a program in the ROM to load the Nand flash driver, the USB driver and other system programs in the boot area to the RAM to run, initialize the Nand flash, re-create the logic-to-physical block conversion table of the Nand flash according to the information in the spare area of the Nand flash, and load the software packet in the reserved area to the RAM as required; and
a user data writing component, configured to write user data to a user area or read the data from the user area according to the logic-to-physical block conversion table, wherein the user area is a logical partition.

9. The apparatus according to claim 8, wherein the system data writing component is configured to acquire a flash ID of the Nand flash, and search for a Nand flash characteristic parameter corresponding to the flash ID in a pre-set flash list according to the flash ID; and write the Nand flash driver and the USB driver to the boot area pre-divided in the Nand flash according to the Nand flash characteristic parameter, load a driver in the boot area to the RAM to run, initialize the Nand flash, create the logical-to-physical block conversion table, and write the software packet containing a system code and system configuration information to a reserved area pre-divided in the Nand flash.

10. The apparatus according to claim 9, **characterized in that** the system data writing component is configured to: in the process that a Nand flash driver and a USB driver are written to the boot area pre-divided in the Nand flash and a system code and system configuration information are written to a reserved area pre-divided in the Nand flash according to the logical-to-physical block conversion table, compute an ECC code through the Nand flash driver, and write the ECC code to a corresponding spare area of the Nand flash.

11. The apparatus according to claim 9, **characterized in that** the system data writing component is configured to: make different large mirror data packets containing ECC codes according to the Nand flash characteristic parameter, each large mirror data packet comprising: a Nand flash driver containing the ECC code, a USB driver containing the ECC code, a system code containing the ECC code and system configuration information containing the ECC code; and write a corresponding Nand flash driver containing the ECC code and a corresponding USB driver containing the ECC code to the boot area according to the Nand flash characteristic parameter, and write the system code containing the ECC code and the system configuration information containing the ECC code corresponding to the Nand flash characteristic parameter to the reserved area according to the logical-to-physical block conversion table.

12. The apparatus according to claim 10 or 11, **characterized in that** the system data writing component is configured to: when only compatibility of a 4bit ECC code and an 8bit ECC code needs to be implemented and the spare area is enough, adopt an 8bit ECC algorithm for the Nand flash needing the 4bit ECC code, acquire the actual size of the spare area according to the flash ID and fill the excessive area of the spare area.

13. The apparatus according to claim 8, **characterized in that** the power-on component is configured to: traverse all the physical blocks, acquire the logical block information corresponding to each of the physical blocks from the spare areas in the first page and the last page of the physical blocks, and create a logical-to-physical block conversion table according to the corresponding relationship between the logical blocks and the physical blocks, wherein the logical-to-physical block conversion table storing the corresponding relationship between the logical block numbers and the physical block numbers, and tagging the usage of the physical blocks.

14. The apparatus according to claim 8, **characterized in that** the system data writing component specifically comprises:
a first computing sub-component, configured to compute a linear logical sector address to obtain a corresponding logical block address and a corresponding sector address,
a first search sub-component, configured to search the logical-to-physical block conversion table, when the physical block has been allocated to the logical block corresponding to the logical block address, call a first judgment sub-component, when the physical block has not been allocated to the logical block corresponding to the logical block address, call a second search sub-component,
the first judgement sub-component, configured to judge whether to write over, when it is determined to write over, search for a new empty physical block according to the usage of the physical blocks in the logical-to-physical block conversion table, move the data, whose address is before the sector address, from the current old physical block to the new empty physical block and call a first update sub-component, and if not, directly call a first writing sub-component,
the second search sub-component, configured to search for a new empty physical block according to the usage of the physical blocks in the logical-to-physical block conversion table and call the first update sub-component,
the first update sub-component, configured to update the logical-to-physical block conversion table and call the first writing sub-component,
the first writing sub-component, configured to write the data to the sector address and call a first recycling sub-component, and
the first recycling sub-component, configured to judge whether the sector address is the last sector, and if so, recycle the old physical block; and
the user data writing component specifically comprises:
a second computing sub-component, configured to compute a linear logical sector address to obtain a corresponding logical block address and a corresponding sector address,
a third search sub-component, configured to search the logical-to-physical block conversion table, if the physical block has been allocated to the logical block corresponding to the logical block address, call a second judgement sub-component, otherwise, call a fourth search sub-component,
the second judgement sub-component, configured to judge whether to write over, when it is determined to write over, search for a new empty physical block according to the usage of the physical blocks in the logical-to-physical block conversion table, move the data, whose address is before the sector address, from the current old physical block to the new empty physical block and call a second update sub-component, and when it is not determined to write over, directly call a second writing sub-component,
the fourth search sub-component, configured to search for a new empty physical block according to the usage of the physical blocks in the logical-to-physical block conversion table and call the second update sub-component,
the second update sub-component, configured to update the logical-to-physical block conversion table and call the second writing sub-component,
the second writing sub-component, configured to write the data to the sector address and call a first recycling sub-component, and
a second recycling sub-component, configured to judge whether the sector address is the last sector, when the sector address is the last sector, recycle the old physical block, the sector address is not the last sector, end the operation.
